# EUROPÄISCHE PATENTANMELDUNG

(11) **EP 2 733 345 A1**
(43) Veröffentlichungstag der Anmeldung: **21.05.2014**
(21) Anmeldenummer: 13187502.3
(22) Anmeldetag: 07.10.2013
(51) Int. Cl.: F02M 63/02, F02M 63/00, F02D 41/38, G05D 16/20

(54) **Druckregelventil für einen Hochdruckspeicher eines Verbrennungsmotors**

(30) Priorität: 20.11.2012 DE 102012221157
(71) Anmelder: Robert Bosch GmbH, 70442 Stuttgart (DE)
(72) Erfinder: Voehringer, Peter, 70806 Kornwestheim (DE); Caroli, Vittorio, 71254 Ditzingen-Heimerdingen (DE)

(57) **Zusammenfassung**

Es wird ein Druckregelventil für einen Hochdruckspeicher einer Einspritzeinrichtung eines Verbrennungsmotors vorgeschlagen. Das Druckregelventil umfasst ein Ventilelement (20), welches von einem Aktor (10) betätigbar ist und welches eine hydraulische Verbindung, die an den Hochdruckspeicher angeschlossen ist, mittels eines Sitzventils (30) zu einem Ventilraum (27) hin verschließt oder öffnet, wobei zum Öffnen des Sitzventils (30) das Ventilelement (20) einen Hub ausführt, und wobei der Ventilraum (27) an eine Niederdruck-Rücklaufleitung angeschlossen ist, in welche eine Absteuermenge von Kraftstoff aus dem Hochdruckspeicher ableitbar ist. In der hydraulischen Verbindung ist zusätzlich zum Sitzventil (30) eine hubabhängige Drossel (40) angeordnet.

## Beschreibung

### Stand der Technik

Die Erfindung betrifft ein Druckregelventil für einen Hochdruckspeicher einer Einspritzeinrichtung eines Verbrennungsmotors nach dem Oberbegriff des Anspruchs 1.

Im Betrieb eines selbstzündenden Verbrennungsmotors mit einem Hochdruckspeicher (Common Rail) wird der Kraftstoff-Systemdruck im Hochdruckspeicher mittels eines Druckregelventils im Wesentlichen konstant gehalten. Sobald der Druck im Hochdruckspeicher den Systemdruck übersteigt, öffnet das Druckregelventil. Wenn der Druck wieder unter Systemdruck gefallen ist, schließt das Druckregelventil. Hierdurch wird gewährleistet, dass die Kraftstoffeinspritzung in den Brennraum des Verbrennungsmotors unter gleichbleibenden Konditionen erfolgt.

Aus dem allgemeinen Stand der Technik sind zur Absteuerung von Kraftstoff aus dem Hochdruckspeicher und somit zur Einstellung des Drucks im Hochdruckspeicher zwei unterschiedliche Typen von Druckregelventilen bekannt. Diese Druckregelventile unterscheiden sich dadurch, dass sie entweder stromlos offen oder stromlos geschlossen sind.

Die stromlos offenen Druckregelventile (z. B. DE 102004002964 A1) sind derart ausgestaltet, dass durch Ansteuerung eines Magnetaktors Kraftstoff aus dem Hochdruckspeicher in ein Niederdrucksystem abgesteuert wird, wodurch der Druck im Hochdruckspeicher auf einen gewünschten Einspritzdruck eingestellt wird. Bei einem Steuergerätefehler oder einem Spannungsversorgungsfehler wird das Druckregelventil von einer Druckfeder geöffnet, so dass aus dem Kraftstoffhochdruckspeicher der Kraftstoff in das Niederdrucksystem entweichen kann. Somit ist auch im Fehlerfall die Sicherheitsfunktion der Druckbegrenzung im Hochdruckspeicher gewährleistet.

Bei stromlos geschlossenen Druckregelventilen (z. B. DE 102007062176 A1) ist der Wrksinn umgekehrt. Hierbei wird das Druckregelventil über eine starke Druckfeder im stromlosen Zustand bis zum Systemdruck einschließlich einer Toleranz geschlossen gehalten. Die Druckregelung, d. h. das Öffnen des Druckregelventils, erfolgt über die Kraft des Aktors, die der Schließkraft der Druckfeder entgegenwirkt. Durch Ansteuerung des Aktors wird die Schließkraft der Druckfeder reduziert bzw. der Federkraft der Druckfeder entgegengewirkt, wodurch der Druck im Hochdruckspeicher auf den gewünschten Einspritzdruck geregelt wird. Im Fehlerfall bleibt somit weiterhin ein entsprechender Druck im Hochdruckspeicher erhalten, so dass eine Notlauffunktion des Verbrennungsmotors (Limp-Home-Funktion) gewährleistet werden kann.

Aus Gründen der Regelbarkeit sind der hydraulische Kraftverlauf in Öffnungsrichtung des Druckregelventils in Abhängigkeit vom Ventilhub bei einem bestimmten Druck (Isobare) und die Aktorkraft in Kombination mit der Druckfeder in Schließrichtung ähnlich. Zur Sicherstellung eines stabilen Betriebs des Verbrennungsmotors ist es erforderlich, dass die Steigung der Aktorkraft über dem Ventilhub größer bzw. dass Gefälle kleiner ist als die hydraulische Kennlinie des Drucks im Hochdruckspeicher.

Mit der Forderung nach größeren Einspritzdrücken muss auch ein Druckregelventil die entsprechenden höheren Kräfte schalten können, damit je nach Wirksinn ein zuverlässiges Öffnen bzw. Schließen des Ventilelements gewährleistet werden kann. Insbesondere bei den bewährten Magnetventilen mit Flachanker erfordert dies in der Regel einen größeren Bauraum.

Bei dem Vorzugskonzept stromlos geöffnetes Druckregelventil ist zur Erreichung des Maximaldrucks die Überwindung der maximalen hydraulischen Kraft erforderlich, da in diesem Fall der Druck über den gesamten Ventilsitzdurchmesser anliegt. Gemäß der physikalischen Bedingung F = p x A ist das Aufbringen der maximalen Kraft von beispielweise 200 bis 240 N bei geschlossenem Ventil mit einem Ventilsitzdurchmesser von 1 mm immer erforderlich, um Einspritzdrücken von 2500 bis 3000 bar zu schalten.

### Offenbarung der Erfindung

Das erfindungsgemäße Druckregelventil mit den kennzeichnenden Merkmalen des Anspruchs 1 hat den Vorteil, dass der Kraftbedarf des Aktors bereits ab sehr kleinen Hüben des Ventilelements gemindert wird. Dies geschieht, indem sich bei minimal geöffnetem Sitzventil durch die hubabhängige Drossel der Ort des größten Druckabfalls aus dem Ventilsitz des Sitzventils in den Bereich der hubabhängigen Drossel verlagert.

Vorteilhafte Weiterbildungen und Verbesserungen der Erfindungen sind durch die Maßnahmen der Unteransprüche möglich.

Die kraftreduzierende Wrkung der hubabhängigen Drossel wird erzielt, wenn die hubabhängige Drossel dem Sitzventil in Strömungsrichtung der Absteuermenge vorgeschaltet ist.

Eine in der hydraulischen Verbindung zwischen Hochdruckspeicher und Niederdruck-Rücklaufleitung wirksame Drosselfunktion lässt sich dadurch erzielen, wenn die hubabhängige Drossel zwischen einer Führungsbohrung für das Ventilelement und einer Einlassöffnung einer Hochdruckzuleitung angeordnet ist. Die hubabhängige Drossel wird dabei im Wesentlichen von einem hubabhängigen Querschnitt der Einlassöffnung gebildet, wobei sich der Querschnitt mit zunehmendem Hub des Ventilelements vergrößert.

Ein hubabhängiger Querschnitt der Einlassöffnung lässt sich auf einfache Weise durch ein Zusammenwirken mit einer am Ventilelement angeordneten Ringnut erzielen, die mit zunehmendem Hub die Einlassöffnung überstreicht, so dass sich mit zunehmendem Hub der Querschnitt der Einlassöffnung vergrößert.

Bei geschlossenem Sitzventil liegt die Ringnut außerhalb der Einlassöffnung, so dass die Einlassöffnung vom Ventilelement verschlossen ist. Bei geöffnetem Sitzventil überstreicht die Ringnut die Einlassöffnung, so dass sich der freigegebene Querschnitt der Einlassöffnung mit zunehmendem Hub des Ventilelements vergrößert. Dadurch verringert sich die Drosselfunktion der hubabhängigen Drossel mit zunehmendem Hub des Ventilelements.

Zur Ausbildung einer hydraulischen Verbindung vom Ringspalt zum Sitzventil ist ein axial verlaufender Strömungskanal vorgesehen, der in einen dem Sitzventil vorgelagerten Ringraum führt.

Die hydraulische Verbindung zwischen Hochdruckspeicher und Ventilraum wird durch eine in einem Ventilkörper ausgebildete Ventilbohrung geführt, in der das Sitzventil angeordnet ist, wobei das Sitzventil von einem am Ventilkörper ausgebildeten Ventilsitz und einer am Ventilelement ausgebildeten konischen Schließfläche gebildet wird.

Eine vorteilhafte Ausführung des Druckregelventils besteht darin, dass der Aktor ein Magnetaktor ist, wobei das Ventilelement von einem Magnetanker mit einer Ankerplatte und einem Ankerbolzen gebildet wird. Die konische Schließfläche ist dabei am Übergang zwischen Ankerplatte und Ankerbolzen ausgebildet. Der Ventilsitz ist an einem Übergang der Ventilbohrung in den Ventilraum angeordnet, wobei die Ventilbohrung eine koaxiale Verlängerung der Führungsbohrung ist, die in den Ventilraum führt.

### Ausführungsbeispiele

Ausführungsbeispiele der Erfindung sind in der Zeichnung dargestellt und in der nachfolgenden Beschreibung näher erläutert.

Es zeigen:
- Figur 1: eine Schnittdarstellung durch ein erfindungsgemäßes Druckregelventil gemäß einer ersten Ausführungsform,
- Figur 2: eine Schnittdarstellung durch einen Ausschnitt eines erfindungsgemäßen Druckregelventils gemäß einer zweiten Ausführungsform und
- Figur 3: eine Darstellung eines Verlaufs einer hydraulischen Kraft Fₕ und einer Magnetkraft Fₘ des erfindungsgemäßen Druckregelventils.

Ein Druckregelventil für eine Einspritzeinrichtung eines Verbrennungsmotors verschließt und öffnet eine hydraulische Verbindung von einem nicht dargestellten Hochdruckspeicher, an den beispielsweise mehrere Injektoren zum Einspritzen von Kraftstoff in einen Brennraum des Verbrennungsmotors angeschlossen sind, zu einer Niederdruck-Rücklaufleitung, über welche eine Absteuermenge von Kraftstoff aus dem Hochdruckspeicher abgeleitet wird. Dadurch wird der Druck im Hochdruckspeicher auf einen erforderlichen Einspritzdruck eingestellt.

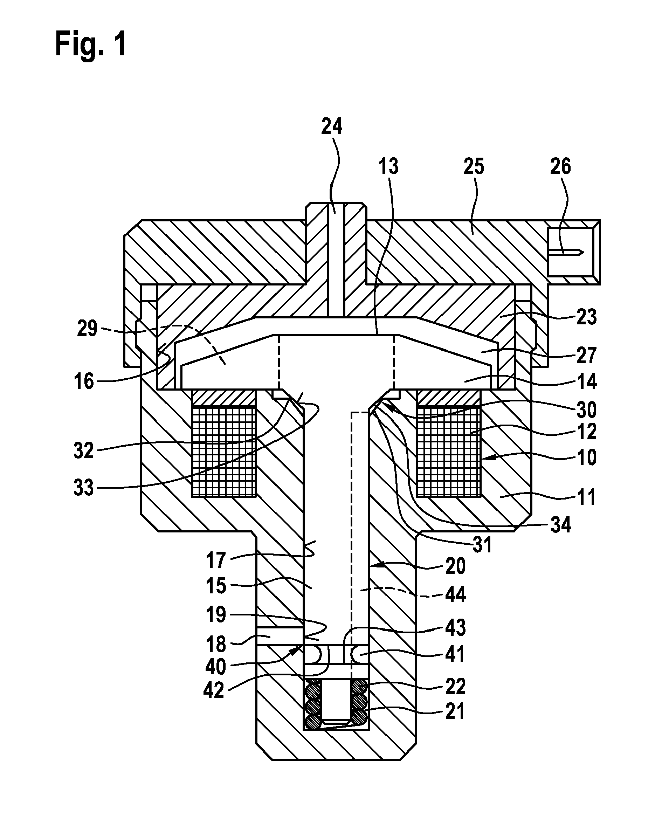

Das in Figur 1 dargestellte Druckregelventil weist einen Aktor 10 auf, der ein axial bewegliches Ventilelement 20 betätigt. Der Aktor 10 und das Ventilelement 20 sind in einem Ventilkörper 11 untergebracht. Der Aktor 10 kann ein magnetischer, piezoelektrischer oder magnetostriktiver Aktor sein. Im vorliegenden Ausführungsbeispiel wird ein Magnetaktor mit einer Magnetspule 12 und einem Magnetanker 13 eingesetzt. Der Magnetanker 13 ist als Flachanker ausgeführt und umfasst eine Ankerplatte 14 und einen Ankerbolzen 15. Es ist aber auch denkbar den Magnetaktor 10 mit einem Tauchanker auszuführen.

Im Ventilkörper 11 ist eine Aufnahme 16 für die Ankerplatte 14 des Magnetankers 13 sowie eine Führungsbohrung 17 zur axialen Führung des Ankerbolzens 15 ausgebildet. Die Magnetspule 12 bildet mit dem umgebenden Teil des Ventilkörpers 11 einen Magnetkern mit einer Polfläche, die sich in einer Ebene am Boden der Aufnahme 16 erstreckt. An die Polfläche wird die Ankerplatte 14 bei Bestromung der Magnetspule 12 mittels einer aufgebrachten Magnetkraft Fₘ angezogen. In der Ankerplatte 14 sind beim Ausführungsbeispiel in Figur 1 zweckmäßigerweise mehrere über den Umfang gleichmäßig verteilte radiale Strömungsschlitze 29 zum Ableiten der Absteuermenge angeordnet.

Im Ventilkörper 11 ist weiterhin eine Hochdruckzuleitung 18 vorgesehen, die mit dem nicht dargestellten Hochdruckspeicher hydraulisch in Verbindung steht. Die Hochdruckzuleitung 18 führt als radiale Bohrung mit einer Einlassöffnung 19 in die Führungsbohrung 17. Die im Ventilkörper 11 angeordnete Führungsbohrung 17 ist als Sackbohrung ausgeführt und weist im Bodenbereich einen Aufnahmeraum 21 auf, in dem eine auf den Ankerbolzen 15 einwirkende Druckfeder 22 angeordnet ist.

In der Aufnahme 16 ist ein Anschlussstück 23 mit einem Niederdruckanschluss 24 eingesetzt. An den Niederdruckanschluss 24 ist die nicht dargestellte Niederdruck-Rücklaufleitung angeschlossen. Das Anschlussstück 23 ist beispielsweise von einer Umspritzung 25 aus Kunststoff umgeben. In der Umspritzung 25 ist ein elektrischer Steckkontakt 26 untergebracht, über den die Magnetspule 12 bestromt wird. Mittels der Umspritzung 25 ist das Anschlussstück 23 fest mit dem Ventilkörper 11 verbunden. Das Anschlussstück 23 begrenzt einen Ventilraum 27, in dem die Ankerplatte 14 des Magnetankers 13 axial beweglich aufgenommen ist. Der Ventilraum 27 steht über den Niederdruckanschluss 24 mit der Niederdruck-Rücklaufleitung hydraulisch in Verbindung.

Die hydraulische Verbindung zwischen Hochdruckspeicher und Niederdruck-Rücklaufleitung wird über ein Sitzventil 30 gesteuert, das eine Ventilbohrung 31 öffnet oder verschließt, wobei die Ventilbohrung in den vorliegenden Ausführungsbeispielen konisch ausgeführt ist. Die Ventilbohrung 31 ist eine koaxiale Verlängerung der Führungsbohrung 17, die an der Polfläche in den Ventilraum 27 mündet.

Das Sitzventil 30 weist einen am Ventilkörper 11 ausgebildeten Ventilsitz 32 auf, auf den eine am Magnetanker 13 ausgebildete konische Schließfläche 33 einwirkt. Der Ventilsitz 32 befindet sich bei den vorliegenden Ausführungsbeispielen in der Ventilbohrung 31 im Übergang zum Ventilraum 27. Die konische Schließfläche 33 ist am Übergang zwischen Ankerbolzen 15 und Ankerplatte 14 ausgebildet.

In der hydraulischen Verbindung zwischen Hochdruckspeicher und Ventilraum 27 ist zusätzlich zum Sitzventil 30 eine hubabhängige hydraulische Drossel 40 angeordnet. Die hubabhängige Drossel 40 ist dem Sitzventil 30 in Strömungsrichtung der Absteuermenge vorgeschaltet, wobei sich der Drosselquerschnitt der hubabhängigen Drossel 40 mit zunehmendem Hub h des Ventilelements 20 vergrößert.

Die hubabhängige Drossel 40 wird durch ein Zusammenwirken der Einlassöffnung 19 mit einer am Ventilbolzen 15 angeordneten Ringnut 41 gebildet. Die hubabhängige Drossel 40 ist als eine Schieberdrossel mit einer oberen Schieberkante 42 und einer unteren Schieberkante 43 ausgeführt. Ein Strömungskanal 44 verbindet die Ringnut 41 mit einem in der Ventilbohrung 31 ausgebildeten Ringraum 34, der dem Sitzventil 30 und somit dem Ventilsitz 32 in Strömungsrichtung der Absteuermenge vorgelagert ist. Der Strömungskanal 44 ist beispielsweise als eine in den Ventilbolzen 15 und/oder in die Führungsbohrung 17 eingebrachte axial verlaufende Nut ausgeführt.

Die hubabhängige Drosselfunktion der Drossel 40 wird dadurch realisiert, indem die Ringnut 41 mit dem Hub h des Magnetankers 13 die Einlassöffnung 19 überstreicht, so dass sich mit zunehmenden Hub h der Querschnitt der Einlassöffnung 19 vergrößert. Dadurch nimmt mit zunehmendem Hub h des Magnetankers 13 die Drosselwirkung an der Einlassöffnung 19 und damit die Drosselwirkung der hubabhängigen Drossel 40 ab.

Bei einem geschlossenen Sitzventil 30 ist auch die hubabhängige Drossel 40 geschlossen, indem die obere Schieberkante 42 unterhalb der Einlassöffnung 19 liegt, wodurch die Einlassöffnung 19 vom Ventilbolzen 15 verschlossen bleibt. Mit zunehmendem Hub h des Ventilelements 20 nimmt die Überdeckung der Ringnut 41 mit der Einlassöffnung 19 zu, wodurch sich der Querschnitt der Einlassöffnung 19 zur Ringnut 41 hin vergrößert.

Bei dem im Figur 1 dargestellten Druckregelventil handelt es sich um den Typ "stromlos geöffnetes" Druckregelventil, bei dem die Druckfeder 22 den Magnetanker 13 ohne anliegende Magnetkraft Fₘ aus dem Ventilsitz 32 drückt und das Sitzventil 30 und die hubabhängige Drossel 20 dadurch geöffnet sind.

Das Sitzventil 30 ist geschlossen, wenn die Magnetspule 12 zur Erzeugung einer erforderlichen maximalen Magnetkraft Fₘ bestromt wird, die notwendig ist, um einer in Öffnungsrichtung auf das Ventilelement 20 wirkende hydraulische Kraft Fₕ, die von einem im Hochdruckspeicher herrschenden Maximaldruck p aufgebracht wird, entgegenzuwirken. Dabei wirkt die vom Magnetaktor 10 aufgebrachte Magnetkraft Fₘ, mit der die Ankerplatte 14 an der Polfläche des Magnetkerns gehalten wird. Wird die Bestromung des Magnetaktors 10 reduziert, bewegt sich der Magnetanker 13 mit einem Hub h in axialer Richtung und das Sitzventil 30 öffnet. Gleichzeitig gelangt die obere Schieberkante 42 der Ringnut 41 in die Einlassöffnung 19, wodurch die Einlassöffnung 19 mit einem geringen Querschnitt zur Ringnut 41 hin offen ist. Mit zunehmender Reduzierung der Bestromung des Magnetaktors 10 vergrößert sich der Hub h des Magnetankers 13. Das Sitzventil 30 öffnet weiter und die obere Schieberkante 42 der Ringnut 41 wird weiter über die Einlassöffnung 19 bewegt bis schließlich die untere Schieberkante 43 ebenfalls die Einlassöffnung 19 erreicht. In dieser Hubstellung des Magnetankers 13 ist die Einlassöffnung 19 zur Ringnut 41 hin vollständig offen. Dadurch entsteht mit abnehmender Bestromung des Magnetaktors 10 eine vom Hub h des Magnetankers 13 und damit eine vom Hub h des Ventilelements 20 abhängige Drosselung der Absteuermenge an der hubabhängigen Drossel 40, die über den Strömungskanal 44 zum Sitzventil 30 gelangt. Dadurch wird der Kraftbedarf bereits ab einem sehr kleinen Hub h des Magnetankers 13 gemindert, indem sich durch die hubabhängige Drossel 40 mit gleichzeitig minimal geöffneter Einlassöffnung 19 der Ort des größten Druckabfalls aus dem Ventilsitz 32 des Sitzventils 30 in den Bereich der Einlassöffnung 19 und damit in die hubabhängige Drossel 40 verlagert.

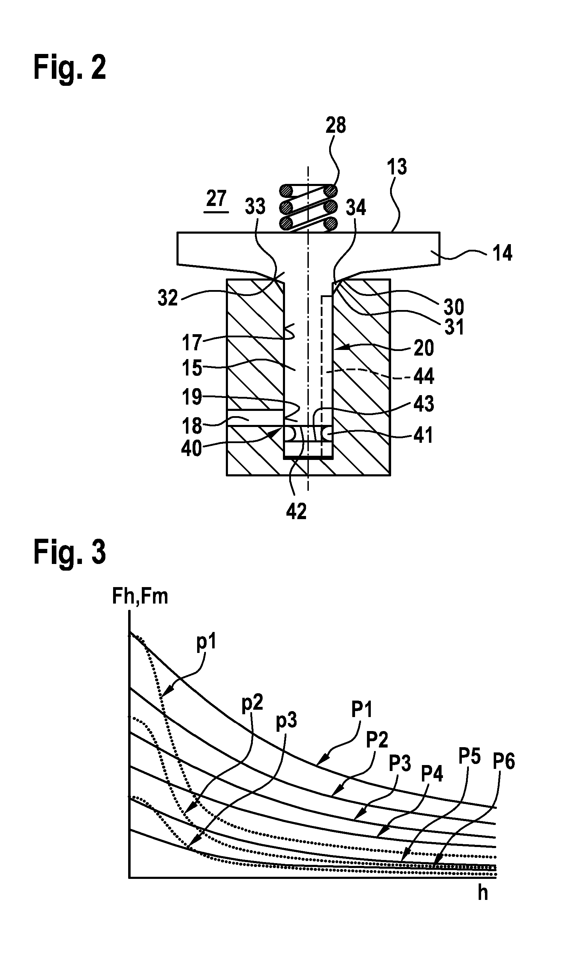

Bei dem in Figur 2 dargestellten Ausschnitt eines Druckregelventils handelt es sich um den Typ "stromlos geschlossenes" Druckregelventil. Gleiche Bauteile sind mit denselben Bezugszeichen bezeichnet. Die stromlos geschlossene Funktion des Druckregelventils wird realisiert, indem eine Druckfeder 28 den Magnetanker 13 in den Ventilsitz 32 stellt und das Sitzventil 30 und die hubabhängige Drossel 40 dadurch geschlossen sind. Dazu muss die Druckfeder 28 eine entsprechende Federkraft aufbringen, um im stromlosen Zustand des Magnetaktors 10 den Magnetanker 13 mit dem Sitzventil 30 und der hubabhängigen Drossel 40 bis zum Systemdruck einschließlich einer Toleranz geschlossen zu halten. Bei Ausfall der Stromversorgung des Magnetaktors 10 im Fehlerfall kann somit weiterhin Einspritzdruck im Hochdruckspeicher gehalten werden, wodurch eine insbesondere für Nutzfahrzeuge erforderliche Notlauffunktion des Verbrennungsmotors, auch Limp-Home-Funktion genannt, aufrechterhalten werden kann.

Die Druckregelung, d. h. das Öffnen des Druckregelventils in Figur 2 erfolgt über die Aktorkraft Fₘ des Magnetaktors 10, die der Schließkraft der Druckfeder 28 entgegenwirkt. Zum Öffnen des Druckregelventils wird die Bestromung des Magnetaktors 10 erhöht. Dabei bewegt sich der Magnetanker 13 mit einem Hub h in axiale Richtung und das Sitzventil 30 öffnet. Gleichzeitig gelangt die obere Schieberkante 42 der Ringnut 41, wie beim Ausführungsbeispiel in Figur 1, in die Einlassöffnung 19, wodurch die Einlassöffnung 19 sich zur Ringnut 41 hin öffnet. Mit zunehmender Bestromung der Magnetspule 12 vergrößert sich der Hub h des Magnetankers 13 bis der Magnetanker 13 mit der Magnetplatte 14 am Magnetkern anliegt. Das Sitzventil 30 öffnet weiter und die obere Schieberkante 42 wird weiter über die Einlassöffnung 19 bewegt bis schließlich die untere Schieberkante 43 ebenfalls die Einlassöffnung 19 erreicht. Bei diesem maximalen Hub h des Magnetankers 13 ist die Einlassöffnung 19 zur Ringnut 41 hin vollständig geöffnet. Dadurch entsteht mit zunehmender Bestromung des Magnetaktors 10 eine vom Hub h des Magnetankers 13 abhängige Drosselung der Absteuermenge an der hubabhängigen Drossel 40, die über den Strömungskanal 44 in den dem Sitzventil 30 vorgelagerten Ringraum 34 gelangt.

Die Kraftkurven von Aktor und Hydraulik müssen entsprechend aneinander angepasst werden, was durch eine Modifikation der hydraulischen Kraft über dem Hub h des Ventilelements 20 mittels der vorgeschalteten hubabhängigen Drossel 40 erfolgt, wie der Darstellung in Figur 3 entnommen werden kann. Figur 3 zeigt für ein "stromlos geöffnetes" Druckregelventil einen Verlauf der in Öffnungsrichtung auf das Ventilelement 20 wirkenden hydraulischen Kraft Fₕ für drei verschiedene Drücke p1, p2, p3 und den Verlauf der schließend wirkenden Magnetkraft Fₘ für beispielsweise verschiedene Aktorleistungen P1, P2, P3, P4, P5 und P6 über dem Hub h des Schließelements 20 bzw. des Magnetankers 13, wobei p1 > p2 > p3 und P1 > P2 > P3 > P4 > P5 > P6 ist.

Üblicherweise ist der Bedarf an Kraftstoff aus dem Hochdruckspeicher im Volllastbetrieb des Verbrennungsmotors so hoch, dass eine zusätzliche Absteuerung von Kraftstoff über das Druckregelventil kaum erforderlich ist. Damit ist ein Betriebsmodus des Druckregelventils denkbar, welcher - im Sinne eines Energiesparkonzepts (Batterieenergiemanagement) - zur Erreichung von beispielsweise 80% des maximal zulässigen Einspritzdrucks p (z.B. 2500 bis 3000 bar) eine kleinere elektrische Leistung aufbringen muss. Selbstverständlich ist jedoch zur Erreichung des Maximaldrucks nach wie vor die für den Magnetaktor 10 vorgesehene Maximalleistung P erforderlich (vgl. Figur 3).

Die vorteilhafte Wirkungsweise der hydraulischen Drosselung der Absteuermenge mit einer dem Sitzventil 30 vorgelagerten hubabhängigen Drossel 40 lässt sich am nachfolgenden Fallbeispiel erläutern. Angenommen die Batterie des Kraftfahrzeugs ist ziemlich leer, so dass nur noch eine schwache Aktorleistung, beispielsweise der Stufe P5 zur Verfügung steht, dann wäre bei einem klassischen Kugelsitzventil keine Möglichkeit vorhanden, einen Einspritzdruck im Hochdruckspeicher mit > p2 einzuregeln. Durch eine geschickte Steuergerätestrategie kann z.B. durch Boosterung die Batterie die Aktorleistung P2 mit bis zu 20% des Vollhubs kurz überschritten werden, so dass im Sinne eines Energiesparkonzepts mit einer Aktorleistung P5 ein Einspritzdruck zwischen p2 und p3 in den restlichen 80 -100% des Vollhubs geregelt werden kann. Möglich ist dies durch die vorgeschaltete hubabhänge Drossel 40, durch die sich ein schnelles Absinken der hydraulischen Kraft Fₕ bereits bei einem kleinen Hub h des Ventilelements einstellt.

## Patentansprüche

1. Druckregelventil für einen Hochdruckspeicher einer Einspritzeinrichtung eines Verbrennungsmotors mit einem Ventilelement (20), welches von einem Aktor (10) betätigbar ist und welches eine hydraulische Verbindung, die an den Hochdruckspeicher angeschlossen ist, mittels eines Sitzventils (30) zu einem Ventilraum (27) hin verschließt oder öffnet, wobei zum Öffnen des Sitzventils (30) das Ventilelement (20) einen Hub h ausführt, und wobei der Ventilraum (27) an eine Niederdruck-Rücklaufleitung angeschlossen ist, in welche eine Absteuermenge von Kraftstoff aus dem Hochdruckspeicher ableitbar ist, **dadurch gekennzeichnet, dass** zusätzlich zum Sitzventil (30) in der hydraulischen Verbindung eine hubabhängige Drossel (40) angeordnet ist.

2. Druckregelventil nach Anspruch 1, **dadurch gekennzeichnet, dass** die hubabhängige Drossel (40) dem Sitzventil (30) in Strömungsrichtung der Absteuermenge vorgeschaltet ist.

3. Druckregelventil nach Anspruch 1 oder 2, **dadurch gekennzeichnet, dass** die hubabhängige Drossel (40) zwischen einer Führungsbohrung (17) für das Ventilelement (20) und einer Einlassöffnung (19) einer Hochdruckzuleitung (18) angeordnet ist.

4. Druckregelventil nach Anspruch 3, **dadurch gekennzeichnet, dass** die hubabhängige Drossel (40) im Wesentlichen von einem hubabhängigen Querschnitt der Einlassöffnung (19) gebildet ist, wobei sich der Querschnitt mit zunehmendem Hub h des Ventilelements (20) vergrößert.

5. Druckregelventil nach Anspruch 4, **dadurch gekennzeichnet, dass** der hubabhängige Querschnitt der Einlassöffnung (19) im Zusammenwirken mit einer am Ventilelement (20) angeordneten Ringnut (41) gebildet ist.

6. Druckregelventil nach Anspruch 5, **dadurch gekennzeichnet, dass** bei geschlossenem Sitzventil (30) die Ringnut (41) außerhalb der Einlassöffnung (19) liegt, so dass die Einlassöffnung (19) vom Ventilelement (20) verschlossen ist, und dass bei geöffnetem Sitzventil (30) die Ringnut (41) die Einlassöffnung (45) überdeckt, so dass sich der freigegebene Querschnitt der Einlassöffnung (19) zur Ringnut (41) hin mit zunehmendem Hub h des Ventilelements (20) vergrößert.

7. Druckregelventil nach Anspruch 5 oder 6, **dadurch gekennzeichnet, dass** von der Ringnut (41) ein axial verlaufender Strömungskanal (44) in einen dem Sitzventil (30) vorgelagerten Ringraum (34) führt.

8. Druckregelventil nach Anspruch 1, **dadurch gekennzeichnet, dass** das Sitzventil (30) von einem am Ventilkörper (11) ausgebildeten Ventilsitz (32) und einer am Ventilelement (20) ausgebildeten konischen Schließfläche (33) gebildet ist.

9. Druckregelventil nach Anspruch 8, **dadurch gekennzeichnet, dass** die konische Schließfläche (33) am Übergang zwischen einer Ankerplatte (14) und einem Ankerbolzen (15) des als Magnetaktor ausgebildeten Aktors (10) angeordnet ist.

10. Druckregelventil nach Anspruch 8, **dadurch gekennzeichnet, dass** der Ventilsitz (32) an einem Übergang einer Ventilbohrung (31) in den Ventilraum (27) des als Magnetaktor ausgebildeten Aktors (10) angeordnet ist.
